Europäisches Patentamt

European Patent Office

Office européen des brevets

(11) Veröffentlichungsnummer: **0 498 074 A2**

# EUROPÄISCHE PATENTANMELDUNG

(21) Anmeldenummer: **91121883.2**

(22) Anmeldetag: **20.12.91**

(51) Int. Cl.5: **B02C 4/32**

(30) Priorität: **08.02.91 DE 4103887**

(43) Veröffentlichungstag der Anmeldung:
**12.08.92 Patentblatt 92/33**

(84) Benannte Vertragsstaaten:
**BE DE ES FR IT NL**

(71) Anmelder: **KRUPP POLYSIUS AG**
**Graf-Galen-Strasse 17**
**W-4720 Beckum(DE)**

(72) Erfinder: **Heinemann, Otto, Dipl.-Ing**
**Galileistrasse 8**
**W-4722 Ennigerloh(DE)**
Erfinder: **Milewski, Günter, Dipl.-Ing.**
**Kloedskamp 9**
**W-4722 Ennigerloh(DE)**
Erfinder: **Krumne, Helmut**
**Veringstrasse 1**
**W-4724 Wadersloh(DE)**
Erfinder: **Könning, Ludwig, Dipl.-Ing.**
**Hesseler 17**
**W-4720 Beckum(DE)**

(74) Vertreter: **Tetzner, Volkmar, Dr.-Ing. Dr. jur.**
**Van-Gogh-Strasse 3**
**W-8000 München 71(DE)**

(54) **Kupplungseinrichtung sowie hiermit ausgerüstete Walzenmühle.**

(57) Die Erfindung betrifft eine Kupplungseinrichtung zur Verbindung zweier relativ zueinander beweglicher Bauteile, insbesondere für eine Walzenmühle. Die beiden Bauteile sind hierbei als Zylinderteile ausgebildet, die jeweils einen zentralen Führungszapfen aufweisen und in die jeweils ein Kolbenteil eingreift, wobei die inneren Umfangsflächen der Kolbenteile und die äußeren Umfangsflächen der Führungszapfen der Zylinderteile derart gestaltet sind, daß die beiden Zylinderteile relativ zueinander außer einer Längsbewegung auch eine Schwenkbewegung sowie eine Querbewegung ausführen können. Die Bewegungen, insbesondere die Längsbewegung, können dabei durch Anschläge begrenzt sein.

EP 0 498 074 A2

Die Erfindung betrifft eine Kupplungseinrichtung (entsprechend dem Oberbegriff des Anspruches 1), eine Vorrichtung (gemäß dem Gattungsbegriff des Anspruches 9) zur Erzeugung einer einstellbaren Druckkraft zwischen zwei relativ zueinander beweglichen Bauteilen sowie eine Walzenmühle (entsprechend dem Gattungsbegriff des Anspruches 10).

Es sind Hydraulikzylinder flacher Bauweise bekannt (DE-A 38 20 373), die durch eine innere, kugelige Führung eine begrenzte Schiefstellung der Kolbenstange gegenüber dem Zylinder zulassen. Derartige Zylinder sind einsetzbar, wenn zwei nicht parallel zueinander liegende Flächen ohne zusätzliche Gelenke oder ausgleichende Zwischenlagen abgestützt werden sollen.

Schwenkbewegungen der beiden gegeneinander abgestützten Teile sind jedoch nur möglich, wenn sich der Drehpunkt der Schwenkbewegung im Zentrum der kugeligen Führung befindet.

Treten außer einer solchen Schwenkbewegung auch Verschiebungen quer zur Zylinderachse auf, so sind zur Aufnahme derartiger Querbewegungen zusätzliche Elemente (wie Gleit- oder Wälzlager oder Elastomerelemente) erforderlich, oder es muß die Stirnfläche der Kolbenstange ballig ausgeführt werden, um auf der Gegenfläche abwälzen zu können, was jedoch hohe Flächenpressungen mit sich bringt.

In Abhängigkeit von der Bauart dieser Elemente treten während der Bewegung Reaktionskräfte auf, die sowohl die Führung des Kolbens als auch die beteiligten Bauteile belasten. Sind systembedingt nur geringe Reaktionskräfte zulässig, so ist dies mit der oben beschriebenen Anordnung nicht oder nur mit sehr großem Aufwand (etwa über eine hydrostatische Gleitlagerung) zu erreichen.

Der Erfindung liegt die Aufgabe zugrunde, eine Kupplungseinrichtung zur Verbindung zweier relativ zueinander beweglicher Bauteile zu schaffen, die es ermöglicht, daß die beiden Bauteile außer einer Längsbewegung in Richtung aufeinander auch eine Schwenkbewegung sowie eine Querbewegung in wenigstens einer senkrecht zur Längsbewegung verlaufenden Richtung ausführen können.

Weiterhin liegt der Erfindung die Aufgabe zugrunde, aufbauend auf einer solchen Kupplungseinrichtung eine Vorrichtung zur Erzeugung einer einstellbaren Druckkraft zwischen zwei relativ zueinander beweglichen Bauteilen zu schaffen, die sich insbesondere bei einer Walzenmühle der im Oberbegriff des Anspruches 10 genannten Gattung einsetzen läßt und die damit alle im Betrieb einer solchen Walzenmühle auftretenden Bewegungen der Loswalze sowie eine verbesserte Einstellung des Nullspaltes einer derartigen Walzenmühle ermöglicht.

Diese Aufgabe wird erfindungsgemäß durch die kennzeichnenden Merkmale der Ansprüche 1, 9 und 10 gelöst. Zweckmäßige Ausgestaltungen der Erfindung sind Gegenstand der Unteransprüche.

Einzelheiten der Erfindung gehen aus der folgenden Beschreibung einiger in der Zeichnung veranschaulichter Ausführungsbeispiele hervor. In der Zeichnung zeigen:

| Fig.1 | einen Horizontalschnitt durch eine mit der erfindungsgemäßen Einrichtung ausgerüstete Walzenmühle, |
| Fig.2 | eine vergrößerte Darstellung einer der beiden Kupplungseinrichtungen, |
| Fig.3 und 4 | Schnitte durch ein weiteres Ausführungsbeispiel, |
| Fig.5 bis 8 | Schnitte durch ein weiteres Ausführungsbeispiel. |

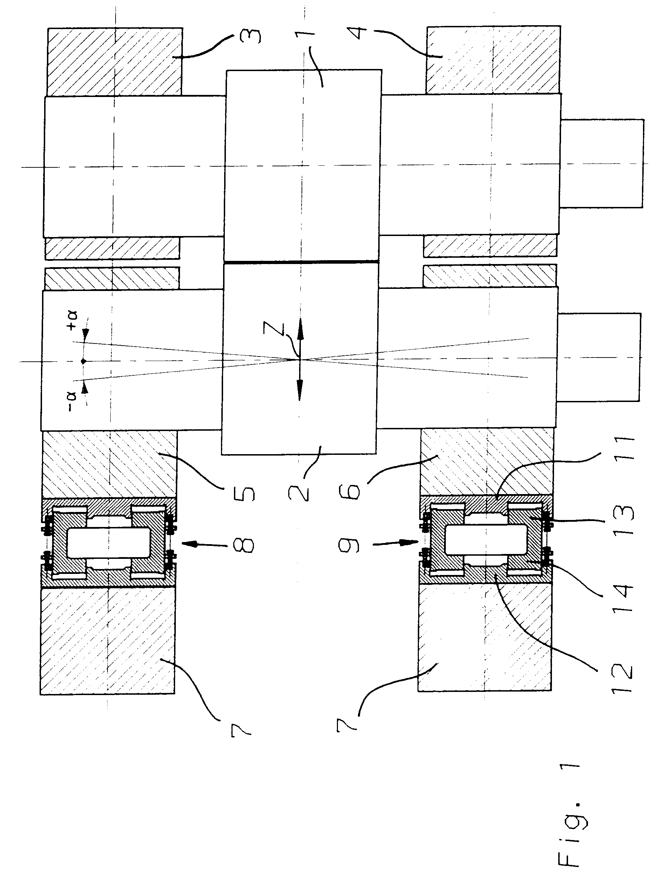

Die in Fig.1 veranschaulichte Walzenmühle enthält zwei mit hohem Druck in Richtung aufeinandergepreßte Walzen 1 und 2, von denen die Walze 1 als Festwalze in ortsfesten Lagern 3, 4 und die Walze 2 als Loswalze in quer zur Walzenachse (in der Zeichenebene der Fig.1) beweglichen Lagern 5, 6 gelagert ist.

Die beweglichen Lager 5, 6 der Loswalze 2 sind an einem ortsfesten Widerlager 7 über Zylinder-Kolbensysteme 8 bzw. 9 abgestützt. Diese Zylinder-Kolbensysteme 8, 9 sind gleichartig ausgebildet und stellen eine Kupplungseinrichtung (im Sinne der Ansprüche 1 bis 8) bzw. eine Vorrichtung (im Sinne des Anspruches 9) zur Erzeugung einer einstellbaren Druckkraft zwischen zwei relativ zueinander beweglichen Bauteilen (nämlich den beweglichen Lagern 5, 6 einerseits und dem ortsfesten Widerlager 7 andererseits) dar.

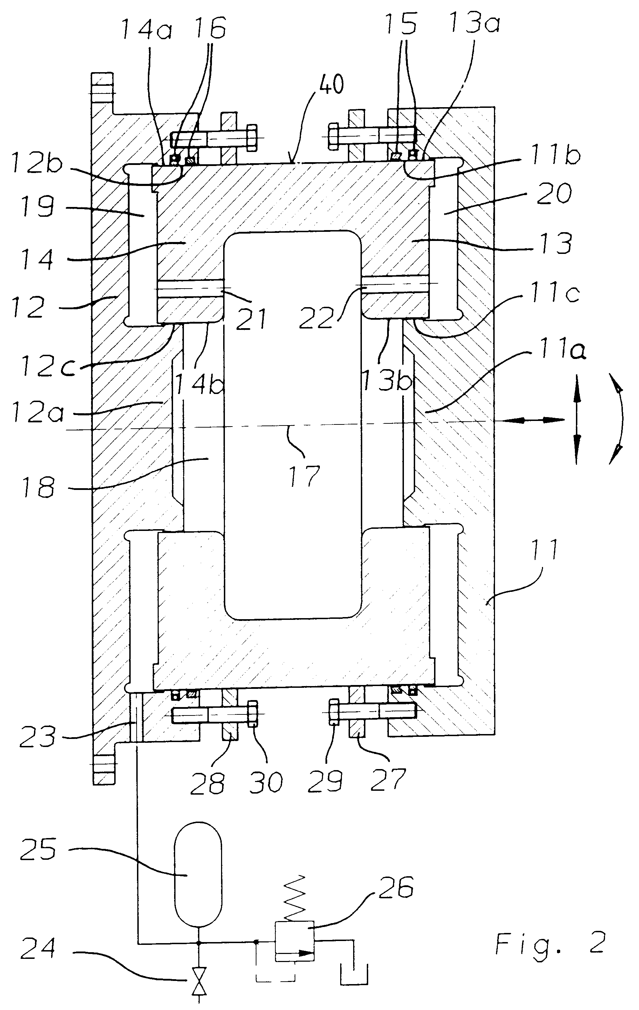

Im folgenden wird der Aufbau eines solchen Zylinder-Kolbensystems 8 bzw. 9 anhand der Fig.2 näher erläutert.

Das in Fig.2 veranschaulichte Zylinder-Kolbensystem enthält einen Hohlkolben 40 mit zwei Zylinderteilen 11, 12, von denen der Zylinderteil 11 im Falle des Zylinder-Kolbensystems 8 mit dem beweglichen Lager 5 und der Zylinderteil 12 mit dem ortsfesten Widerlager 7 verbunden ist. Die beiden Zylinderteile 11 und 12 weisen jeweils einen zentralen Führungszapfen 11a, 12a auf.

In die beiden Zylinderteile 11, 12 greift jeweils ein Kolbenteil 13, 14 ein, dessen zylindrische äußere Umfangsfläche 13a, 14a mit der zylindrischen inneren Umfangsfläche 11b, 12b der Zylinderteile 11, 12 über Dichtungen 15 bzw. 16 in fluiddichter Berührung steht.

Bei dem in Fig.2 veranschaulichten Ausführungsbeispiel der Erfindung besitzen die Führungszapfen 11a, 12a in einer senkrecht zur gemeinsamen Achse 17 von Führungszapfen 11a, 12a und zugehörigem Zylinderteil 11, 12 verlaufenden Querschnittsebene (d.h. senkrecht zur Zeichenebene der Fig. 2) einen kreisförmigen Querschnitt. Die Führungszapfen 11a, 12a sind also im wesentlichen (von der nachstehend erläuterten konvexen Krümmung abgesehen) zylindrisch ausgebildet.

Die Kolbenteile 13, 14 weisen bei dem Ausführungsbeispiel gemäß Fig.2 eine zylindrische innere Umfangsfläche 13b bzw. 14b auf. Die hiermit zusammenwirkende äußere Umfangsfläche 11c bzw. 12c der Führungszapfen 11a, 12a ist dagegen - betrachtet in einer durch die Achse 17 des Führungszapfens verlaufenden Längsschnittsebene (etwa in der Zeichenebene der Fig.2) - konvex gekrümmt. Die innere Umfangsfläche 13b, 14b der Kolbenteile 13, 14 wirkt daher mit der äußeren Umfangsfläche 11c, 12c der Führungszapfen 11a, 12a im Führungssinne zusammen.

Die inneren Umfangsflächen 13b, 14b der Kolbenteile 13, 14 und die äußeren Umfangsflächen 11c, 12c der Führungszapfen 11a, 12a sind damit derart gestaltet, daß die beiden Zylinderteile 11, 12 relativ zueinander außer einer Längsbewegung (in Richtung der Achse 17) auch eine Schwenkbewegung mit einem beliebigen Schwenkzentrum (etwa im Zentrum Z der Loswalze 2 - vgl. Fig.1) ausführen können, ferner eine Querbewegung in wenigstens einer senkrecht zur Zylinderachse 17 verlaufenden Richtung. Die Zylinder-Kolbensysteme 8, 9 gestatten damit alle im Betrieb der Walzenmühle gemäß Fig.1 auftretenden Bewegungen der Loswalze 2, insbesondere auch die in Fig.1 angedeuteten Schrägstellungen der Loswalze 2 um einen Winkel +/- $\alpha$.

Die zwischen den Zylinderteilen 11 und 12 und den Kolbenteilen 13. 14 vorhandenen Hohlräume 18, 19, 20 sind mit einem Fluid gefüllt und stehen beispielsweise über Verbindungskanäle 21, 22 miteinander in Verbindung.

Diese mit einem Fluid gefüllten Hohlräume 18, 19, 20 sind ferner über einen im Zylinderteil vorgesehenen Kanal 23 und ein steuerbares Ventil 24 an eine nicht veranschaulichte, einstellbare Druckmittelquelle angeschlossen. Beide Zylinder-Kolbensysteme 8, 9 können dabei zweckmäßig über gesondert einstellbare Ventile - mit einer gemeinsamen einstellbaren Druckmittelquelle verbunden sein. Weiterhin sind die mit Fluid gefüllten Räume der beiden Zylinder-Kolbensysteme 8, 9 jeweils mit einem als Blasen- oder Kolbenspeicher ausgebildeten Druckmittelspeicher 25 und einem Druckbegrenzungsventil 26 verbunden. Über die Zylinder-Kolbensysteme 8, 9 können damit die beiden beweglichen Lager 5, 6 der Loswalze 2 mit einstellbaren Druck- bzw. Stützkräften beaufschlagt werden.

Eine Querverschiebung der beiden Zylinderteile 11 und 12 gegeneinander wird durch eine Schrägstellung der miteinander verbundenen bzw. einstückig ausgebildeten Kolbenteile 13, 14 aufgenommen. Die Größe der Schrägstellung hängt vom Verhältnis zwischen dem Maß der Querverschiebung und der Länge der Kolbenteile 13, 14 ab. Kleine Schrägstellungen lassen sich durch lang ausgebildete Kolbenteile 13, 14 erreichen.

Die Reaktionskraft ergibt sich aus der Reibkraft zwischen den inneren Umfangsflächen 13b, 14b der Kolbenteile 13, 14 und den konvex gekrümmten äußeren Umfangsflächen 11c, 12c der Führungszapfen 11a, 12a.

Der Ausfahrweg der beiden Zylinder-Kolbensysteme 8, 9 wird zweckmäßig durch Anschläge 27, 28 begrenzt, die mit einstellbaren Anschlagschrauben 29, 30 zusammenwirken.

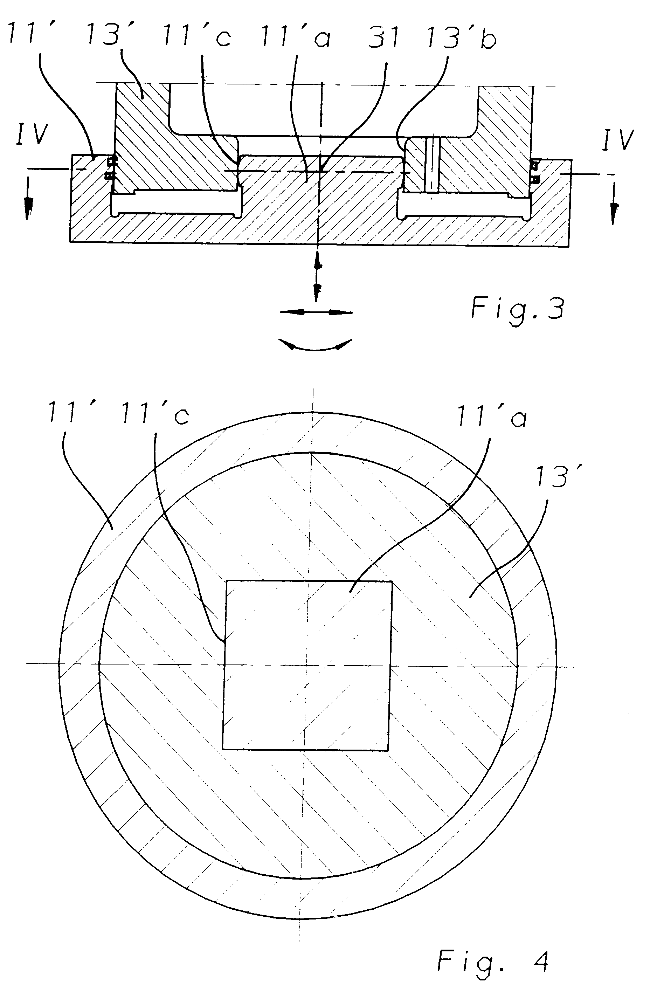

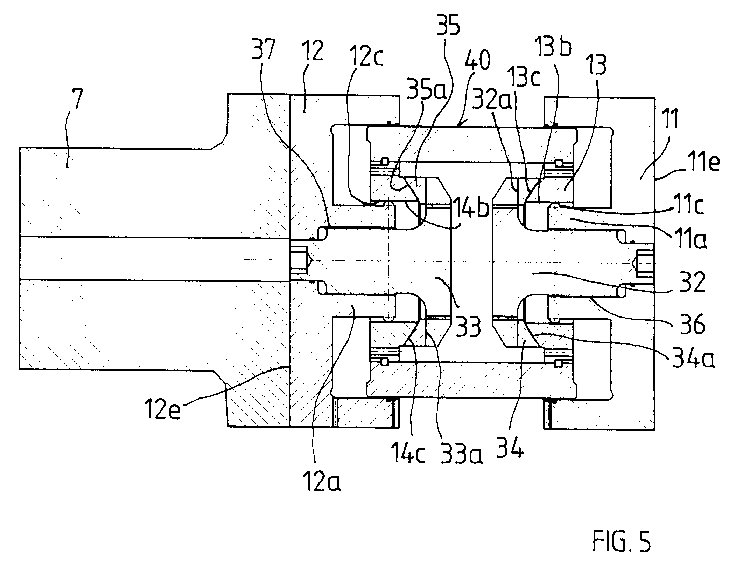

Bei dem in den Fig.3 und 4 veranschaulichten Ausführungsbeispiel weisen die Führungszapfen (z.B. 11'a) der Zylinderteile (z.B. 11') in einer senkrecht zur gemeinsamen Achse von Führungszapfen und zugehörigem zylindrischen Teil verlaufenden Querschnittsebene (d.h. in der Zeichenebene der Fig.4) einen rechteckigen, vorzugsweise quadratischen Querschnitt auf. In einer durch die Achse des Führungszapfens verlaufenden Längsschnittsebene (Zeichenebene der Fig.3) ist die mit der zylindrischen inneren Umfangsfläche 13b des Kolbenteiles 13' zusammenwirkende äußere Umfangsfläche 11'c des Führungszapfens 11'a konvex gekrümmt. Damit ist eine Schwenkbewegung des Kolbenteiles 13' relativ zum Zylinderteil 11' um eine Achse 31 möglich, die die Zylinderachse der von den äußeren Umfangsflächen 11'c gebildeten Zylinderteilflächen darstellt.

Anhand der Fig.5 bis 8 sei nun ein weiteres Ausführungsbeispiel der Erfindung erläutert, wobei für gleiche Bauteile dieselben Bezugszeichen wie in den Fig.1 bis 4 verwendet sind. Dieses Ausführungsbeispiel der Kupplungseinrichtung ermöglicht insbesondere eine vorteilhafte Einstellung des sogenannten Nullspaltes einer Walzenmühle.

Ehe bei einer Walzenmühle das Mahlgut den beiden Mahlwalzen aufgegeben wird, muß dafür gesorgt werden, daß die Loswalze mit einer gewissen Vorspannkraft in einer festgelegten Position (der sogenannten Nullspalt-Position) gegenüber der Festwalze hydraulisch bzw. mechanisch verspannt wird. In dieser Nullspalt-Position berühren sich die beiden Mahlwalzen an der engsten Stelle des Mahlspaltes nicht. Der Luftspalt an dieser engsten Stelle wird dabei als "Nullspalt" bezeichnet.

Bisher erfolgt die Festlegung der Loswalze in der Nullspalt-Position dadurch, daß die Loswalzeneinheit hydraulisch mit großer Kraft von den Arbeitszylindern gegen Anschlagklötze gepreßt wird, die sich ihrerseits mechanisch an der Festwalzeneinheit abstützen. Diese Methode der Einstellung des Nullspaltes ist jedoch mit zwei wesentlichen Nachteilen behaftet.

Im Hinblick auf die hohen Belastungen durch die große Vorspannkraft müssen alle Lagersteine sehr stabil gebaut werden, wobei vor allem die Verformung der Lagersteine der Loswalze verhältnismäßig kleine Grenzwerte nicht überschreiten darf.

Im Hinblick auf die Addition unvermeidbarer Toleranzen ist die durch die Vorspannkraft bedingte Lage der Mittenachse der Loswalze in bezug auf den Maschinenrahmen nicht genau rechtwinklig, was bei Lagerungen mit Zylinderlagern (das sind Gleitlager und Zylinderrollenlager) zu Zwängungen der Loswalzenwelle in den beiden Lagerstellen und zu hierdurch bedingten Ausfällen führen kann.

Die vorstehend angedeuteten Nachteile der Nullspalt-Einstellung lassen sich durch das in den Fig.5 bis 8 veranschaulichte weitere Ausführungsbeispiel der erfindungsgemäßen Kupplungseinrichtung vermeiden.

Bei diesem Ausführungsbeispiel ist mit den Führungszapfen 11a, 12a der beiden Zylinderteile 11, 12 je ein Anschlagkopf 32 bzw. 33 verbunden, der durch Anschlageingriff mit dem zugehörigen Kolbenteil 13, 14 des Hohlkolbens 40 den maximalen Abstand zwischen den beiden Zylinderteilen 11, 12 begrenzt.

Dabei ist zwischen einer ebenen Anschlagfläche 32a, 33a des Anschlagkopfes 32, 33 und dem zugeordneten Kolbenteil 13, 14 des Hohlkolbens 40 je ein loses Zwischenglied 34, 35 vorgesehen, das auf seiner dem Kolbenteil 13, 14 zugewandten Fläche als Kugelpfanne 34a, 35a ausgebildet ist, die mit einer komplementär gestalteten Kalottenfläche 13c, 14c des Kolbenteiles 13, 14 in Berührung steht.

Die Anschlagköpfe 32, 33 sind über ein Schraubgewinde 36, 37 mit den Führungszapfen 11a, 12a verbunden, so daß der axiale Abstand zwischen der Anschlagfläche 32a, 33a des Anschlagkopfes 32, 33 und der Bodenfläche 11e, 12e des Zylinderteiles 11, 12 einstellbar ist. Stattdessen ist es im Rahmen der Erfindung auch möglich, eine feste Verbindung zwischen den Anschlagköpfen 32, 33 und den Zylinderteilen 11, 12 vorzusehen.

Die äußere Umfangsfläche 11c bzw. 12c der Zylinderteile 11, 12, die mit der zylindrischen inneren Umfangsfläche 13b, 14b der Kolbenteile 13, 14 in Berührung steht, ist auch bei diesem Ausführungsbeispiel konvex gekrümmt.

Bei diesem Ausführungsbeispiel bleibt die Schwenkgelenkigkeit der Zylinderteile 11 und 12 relativ zum Hohlkolben 40 sowie die Schwenkgelenkigkeit des Hohlkolbens 40 relativ zu jedem der beiden Zylinderteile 11, 12 auch dann erhalten, wenn sich die einzelnen Teile in der in Fig.5 veranschaulichten Lage befinden, die der Nullspalt-Position der Loswalze entspricht. Die beiden Zylinderteile 11, 12 können somit bei Zugabe von druckbeaufschlagtem Hydrauliköl nur so weit auseinanderfahren, wie es die Anschlagköpfe 32, 33 erlauben. Das ganze Zylindersystem steht damit unter einer inneren Vorspannung, während der im Innern vorgespannte Zylinder nach außen kraftfrei ist. Damit bleiben auch die Lagersteine der Loswalze (Lager 5, 6 gemäß Fig.1) in der Nullspalt-Position lastfrei; auf sie wirken - im Gegensatz zu der bisher üblichen Nullspalt-Einstellung - keine äußeren Kräfte.

Da in dieser Nullspalt-Position der Kupplungseinrichtung die Gelenkigkeit des von den beiden Zylinderteilen 11 und 12 und dem Hohlkolben 40 gebildeten Doppelgelenkzylinders voll erhalten bleibt, können die Lagersteine der Loswalze (Lager 5, 6 mit hiermit verbundenen Zylinderteilen 11) um einen gewissen Betrag relativ zum Maschinenrahmen schwenken. Damit ist der Lagerstein des betreffenden Lagers nicht mehr in irgendeine Zwangslage gepreßt, sondern kann sich der jeweiligen Lage der Welle anpassen, so daß bei Zylinderlagern unerwünschte Kantenpressungen vermieden werden. Zur Anpaßbewegung der Lagersteine muß lediglich das Reibmoment der unter Öl liegenden sphärischen Abstützung (Kugelpfannen 34a, 35a) überwunden werden. Dieses Reibmoment ist jedoch wegen seiner relativ kurzen Hebelarme nicht sehr groß.

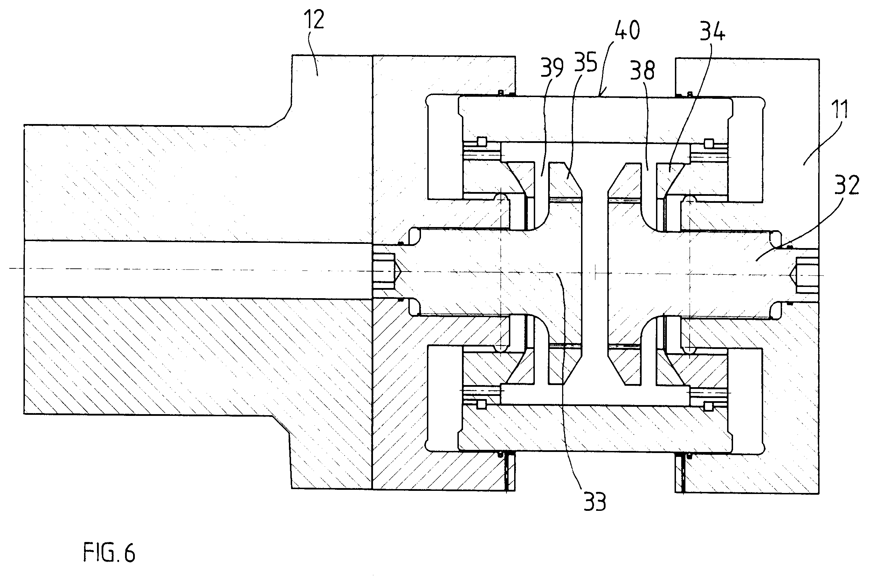

Wird beim Mahlbetrieb die Loswalze durch das in den Mahlspalt eingezogene Mahlgut zurückgedrückt (wobei sich der Mahlspalt erweitert), so nehmen die Teile der Kupplungseinrichtung eine Relativlage ein, wie sie schematisch in Fig.6 veranschaulicht ist. Hierbei heben die Anschlagköpfe 32, 33 von den ebenen Gegenflächen der Zwischenglieder 34, 35 ab. Es entsteht damit zwischen den Anschlagköpfen 32, 33 und den Zwischengliedern 34, 35 jeweils ein dynamischer Spalt 38, 39.

Wird die der Walzenmühle zugeführte Mahlgutmenge verringert und die Zufuhr ganz abgestellt, so schlägt der Mahlbetrieb wieder in Nullspalt-Betrieb um. Die Anschlagköpfe 32, 33 legen sich an die Zwischenglieder 34, 35 an, so daß der Kraftfluß wieder innerhalb des von den Zylinderteilen 11, 12 und dem Hohlkolben 40 gebildeten Zylindersystems geschlossen wird. All dies erfolgt stark gedämpft unter Öl.

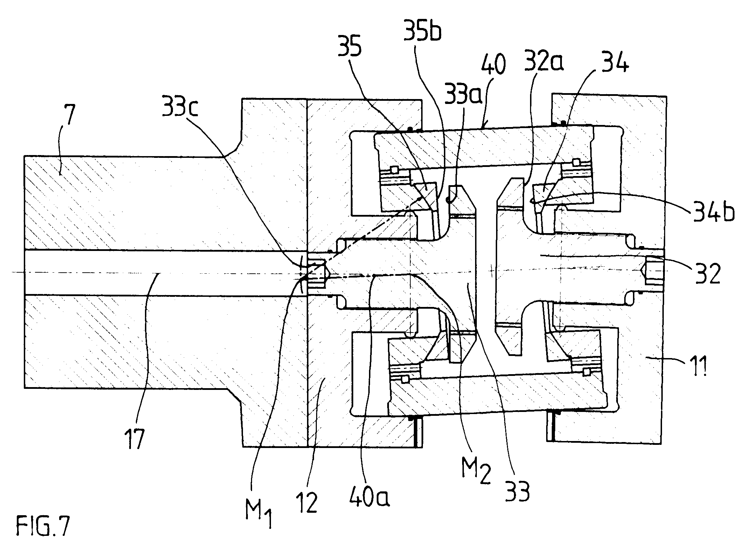

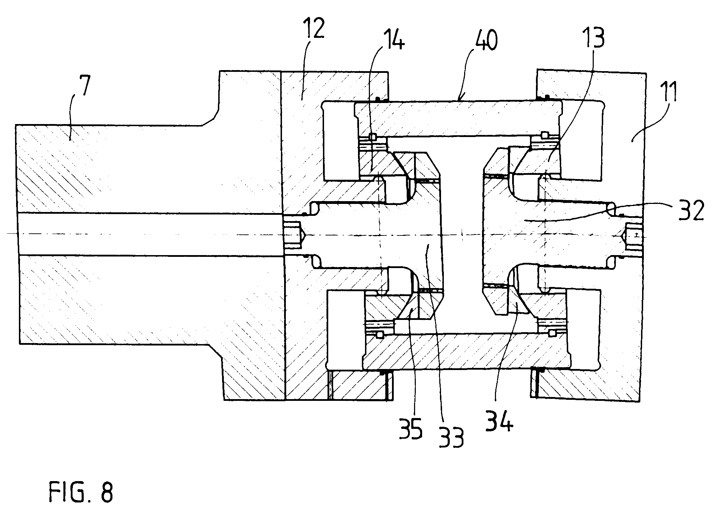

Es kann nun jedoch auch sein, daß diese erneute Berührung zwischen den Anschlagköpfen 32, 33 und den Zwischengliedern 34, 35 aus einer vorangehenden Schrägstellung der Loswalze heraus erfolgt. Die hierbei auftretenden Verhältnisse sind in den Fig.7 und 8 veranschaulicht. Der Kontakt erfolgt hierbei nicht gleichzeitig und gleichmäßig auf den beiden Kreisflächen (d. h. den einander zugewandten Flächen 32a, 34b bzw. 33a, 35b), sondern er beginnt an einer Umfangsstelle zunächst noch kraftfrei (vgl. Fig.7).

Mit zunehmendem Kontakt wächst die Kraft auf die Kontaktstelle, bis sie beim endgültigen Aufhören der Zufuhr von Mahlgut zum Walzenspalt ihre für den Nullspalt-Betrieb vorgegebene Größe erreicht hat (vgl. Fig.8).

Kinematisch spielt sich dabei zwischen dem Anschlagkopf 32, 33 und dem zugehörigen Zwischenglied 34, 35 folgendes ab:

Die Mittenachse 40a des Hohlkolbens 40 ist gegenüber der Achse 17 (Zylinderteil mit Anschlagkopf in horizontaler Ebene) um einen kleinen Winkel (maximal etwa 3°) geneigt. Kontaktiert nun das lose Zwischenglied 34, 35 an einer Stelle den zugehörigen Anschlagkopf 32, 33, so entsteht ein Drehmoment auf das Zwischenglied, das sich mittels seiner Kugelpfanne 34a, 35a in eine Kraftaufnahmeposition hineindreht. Diese Kraftaufnahmeposition ist dann erreicht, wenn auf das Zwischenglied 34, 35 keine einseitig angreifende Kraft, d. h. kein Drehmoment, mehr wirkt. Damit haben die beiden zylindrischen Flächen 32a, 34b bzw. 33a, 35b eine zueinander parallele Lage erreicht, die zur Übertragung von Druckkräften notwendig ist. Nach Einnahme dieser Parallelposition kann dann die Übertragung der zur Nullspalt-Position gehörenden Vorspannkraft erfolgen.

Der von der Kugelpfanne 34a bzw. 35a gebildete Drehpunkt M1 und der Drehpunkt M2 des Hohlkolbens 40 brauchen nicht identisch zu sein. Bei Verstellbewegungen des Anschlagköpfe 32, 33 verändern sie ohnehin ihre Relativlage. Der Drehpunkt M2 des Hohlkolbens 40 liegt fest im Raum bzw. in der horizontalen Ebene, während sich der Drehpunkt M1 der Kugelpfannen 34a, 35a im Raum bzw. in der horizontalen Ebene ändert. Der Drehpunkt der Kugelpfannen 34a, 35a liegt immer auf der Mittenachse des Hohlkolbens 40. Ändert der Hohlkolben 40 seine Winkelstellung, so wandert der Drehpunkt M1 der Kugelpfannen 34a, 35a auf einem Kreisbogen mit dem Drehpunkt M2 des Hohlkolbens als Mittelpunkt.

Die sogenannte Steilheit der von den Kugelpfannen 34a, 35a gebildeten kugeligen Abstützung ist selbstverständlich so gewählt, daß die Abstützung nicht selbsthemmend ist, sondern daß sich das Zwischenglied 34, 35 schon mit einem verhältnismäßig geringen Drehmoment in seine Kraftaufnahmeposition drehen kann.

Der Nullspalt läßt sich durch Änderung der Gesamtlänge des von den Zylinderteilen 11, 12 und dem Hohlkolben 40 gebildeten Doppelgelenkzylinders auf den gewünschten Wert einstellen. Durch Verkürzen der Gesamtlänge des Zylindersystems wird der Nullspalt größer, durch Verlängern wird er kleiner. Die Änderungen der Gesamtlänge des Zylindersystems erfolgen durch Nachstellen des dem Widerlager 7 zugewandten Anschlagkopfes 33 mittels einer Spindel, die durch das Widerlager 7 hindurchgeführt wird und in eine Ausnehmung 33c des Anschlagkopfes 33 eingreift.

Die Grenzen für die Winkelbeweglichkeit der beiden Zylinderteile 11, 12 relativ zum Hohlkolben 40 ergeben sich aus den Spielverhältnissen zwischen den Zylinderteilen und dem Hohlkolben.

**Patentansprüche**

1. Kupplungseinrichtung zur Verbindung zweier relativ zueinander beweglicher Bauteile,

   gekennzeichnet durch folgende Merkmale:
   a) die beiden Bauteile sind als Zylinderteile (11, 12) ausgebildet, die jeweils einen zentralen Führungszapfen (11a, 12a) aufweisen;
   b) in die beiden Zylinderteile (11, 12) greift jeweils ein Kolbenteil (13, 14) ein, dessen zylindrische äußere Umfangsfläche (13a, 14a) mit der zylindrischen inneren Umfangsfläche (11b, 12b) der Zylinderteile (11, 12) in fluiddichter Berührung steht und dessen innere Umfangsfläche (13b, 14b) wenigstens teilweise mit der äußeren Umfangsfläche (11c, 12c) des Führungszapfens des zugehörigen Zylinderteiles im Führungssinne zusammenwirkt;
   c) die inneren Umfangsflächen (13b, 14b) der Kolbenteile (13, 14) und die äußeren Umfangsflächen (11c, 12c) der Führungszapfen (11a, 12a) der Zylinderteile 11, 12 sind derart gestaltet, daß die beiden Zylinderteile relativ zueinander außer einer Längsbewegung in Richtung einer Zylinderachse (17) auch eine Schwenkbewegung sowie eine Querbewegung in wenigstens einer senkrecht zur Zylinderachse verlaufenden Richtung ausführen können;
   d) die zwischen den Zylinderteilen (11, 12) und den Kolbenteilen (13, 14) vorhandenen Hohlräume (18, 19, 20) sind mit einem Fluid gefüllt.

2. Kupplungseinrichtung nach Anspruch 1, dadurch gekennzeichnet, daß die Führungszapfen (11a, 12a) in einer senkrecht zur gemeinsamen Achse (17) von Führungszapfen und zugehörigem Zylinderteil (11, 12) verlaufenden Querschnittsebene einen kreisförmigen Querschnitt aufweisen.

3. Kupplungseinrichtng nach Anspruch 1, dadurch gekennzeichnet, daß die Führungszapfen (z.B. 11'a) in einer senkrecht zur gemeinsamen Achse von Führungszapfen und zugehörigem Zylinderteil (z.B. 11') verlaufenden Querschnittsebene einen rechteckigen, vorzugsweise quadratischen Querschnitt aufweisen.

4. Kupplungseinrichtung nach Anspruch 1, dadurch gekennzeichnet, daß die innere Umfangsfläche (13b, 14b) der Kolbenteile (13, 14) zylindrisch ausgebildet und die hiermit zusammenwirkende äußere Umfangsfläche (11c, 12c) der Führungszapfen (11a, 12a) - betrachtet in einer durch die Achse (17) des Führungszapfens verlaufenden Längsschnittsebene - konvex gekrümmt ist.

5. Kupplungseinrichtung nach Anspruch 1, dadurch gekennzeichnet, daß die äußere Umfangsfläche der Führungszapfen zylindrisch ausgebildet und die hiermit zusammenwirkende innere Umfangsfläche der Kolbenteile - betrachtet in einer durch die Achse des Kolbenteiles verlaufenden Längsschnittsebene - konvex gekrümmt ist.

6. Kupplungseinrichtung nach Anspruch 1, dadurch gekennzeichnet, daß mit den Führungszapfen (11a, 12a) der beiden Zylinderteile (11, 12) je ein Anschlagkopf (32, 33) verbunden ist, der durch Anschlageingriff mit dem zugehörigen Kolbenteil (13, 14) eines Hohlkolbens (40) den maximalen Abstand zwischen den beiden Zylinderteilen (11, 12) begrenzt.

7. Kupplungseinrichtung nach Anspruch 6, dadurch gekennzeichnet, daß der axiale Abstand zwischen einer mit dem zugehörigen Kolbenteil (13, 14) zusammenwirkenden Anschlagfläche (32a, 33a) des Anschlagkopfes (32, 33) und dem Boden des diesen Anschlagkopf tragenden Zylinderteiles (11, 12) einstellbar ist.

8. Kupplungseinrichtung nach Anspruch 6, dadurch gekennzeichnet, daß zwischen den beiden Anschlagköpfen (32, 33) und den zugehörigen Kolbenteilen (13, 14) des Hohlkolbens (40) je ein loses Zwischenglied (34, 35) vorgesehen ist, das auf seiner dem Kolbenteil zugewandten Fläche als Kugelpfanne (34a, 35a) ausgebildet ist, mit einer komplementär gestalteten Kalottenfläche (13c, 14c) des Kolbenteiles (13, 14) in Berührung steht, während die einander zugewandten Flächen (32a, 34b bzw. 33a, 35b) des Anschlagkopfes (32, 33) und des Zwischengliedes (34, 35) als ebene Anschlagflächen ausgebildet sind.

9. Vorrichtung zur Erzeugung einer einstellbaren Druckkraft zwischen zwei relativ zueinander beweglichen Bauteilen, gekennzeichnet durch eine Kupplungseinrichtung gemäß Anspruch 1, wobei die zwischen den Zylinderteilen (11, 12) und den Kolbenteilen (13, 14) vorhandenen Hohlräume (18, 19, 20) an eine einstellbare Druckmittelquelle angeschlossen sind.

10. Walzenmühle zur Zerkleinerung von sprödem Mahlgut, enthaltend zwei mit hohem Druck in Richtung aufeinandergepreßte Walzen, von denen die eine Walze als Festwalze (1) in ortsfesten Lagern (3, 4) und die andere Walze als Loswalze (2) in quer zur Walzenachse beweglichen Lagern (5, 6) gelagert ist, wobei die beweglichen Lager (5, 6) der Loswalze (2) über ein an einer einstellbaren Druckmittelquelle angeschlossenes Zylinder-Kolbensystem (8, 9) an einem ortsfesten Widerlager (7) abgestützt sind, gekennzeichnet durch zwei den beiden beweglichen Lagern (5, 6) der Loswalze (2) zugeordnete Vorrichtungen gemäß Anspruch 9, wobei in jeder der beiden Vorrichtungen der eine der beiden durch die Kupplungseinrichtung miteinander verbundenen Bauteile mit dem ortsfesten Widerlager und der andere mit dem zugehörigen beweglichen Lager der Loswalze in Verbindung steht.

Fig. 1

Fig. 2

Fig.3

Fig. 4

FIG. 5

FIG.6

EP 0 498 074 A2

FIG.7

EP 0 498 074 A2

FIG. 8